# EUROPÄISCHE PATENTANMELDUNG

(11) **EP 4 512 643 A1**
(43) Veröffentlichungstag der Anmeldung: **26.02.2025**
(21) Anmeldenummer: 24192775.5
(22) Anmeldetag: 05.08.2024
(51) Int. Cl.: B60H 1/00, B60H 1/32, E02F 9/08, E01H 4/02

(54) **ZIVILES KETTENFAHRZEUG**

(30) Priorität: 15.08.2023 DE 102023121776
(71) Anmelder: Kässbohrer Geländefahrzeug AG, 88471 Laupheim (DE)
(72) Erfinder: Müller, Michael, 88483 Burgrieden-Rot (DE)
(74) Vertreter: Patentanwälte Ruff, Wilhelm, Beier, Dauster & Partner mbB

(57) **Zusammenfassung**

Ziviles Kettenfahrzeug aufweisend ein Antriebssystem (10), das zum Bereitstellen von Antriebsenergie eingerichtet ist, eine Fahrerkabine und ein dem Antriebssystem (10) und der Fahrerkabine zugeordnetes Wärmeübertragungssystem, das einen Primärkreislauf (40) zur Aufnahme eines darin zirkulierenden Kühlmittels, einen Sekundärkreislauf (50) zur Aufnahme eines darin zirkulierenden Kältemittels und einen Wärmeübertrager (31) umfasst, der den Primärkreislauf (40) und den Sekundärkreislauf (50) thermisch miteinander koppelt, wobei der Primärkreislauf (40) zur Kühlung des Antriebssystems (10) durch Übertragung von Abwärme des Antriebssystems (10) auf das Kühlmittel eingerichtet ist, wobei der Wärmeübertrager (31) zur Übertragung von Wärme vom Kühlmittel des Primärkreislaufs (40) auf das Kältemittel des Sekundärkreislaufs (50) eingerichtet ist, und wobei der Sekundärkreislauf (50) zur Abgabe von Wärme an die Raumluft in der Fahrerkabine sowie an die Umgebungsluft durch Abkühlen des Kältemittels eingerichtet ist.

## Beschreibung

Die Erfindung betrifft ein ziviles Kettenfahrzeug aufweisend ein Antriebssystem, das zum Bereitstellen von Antriebsenergie eingerichtet ist, eine Fahrerkabine sowie ein dem Antriebssystem und der Fahrerkabine zugeordnetes Wärmeübertragungssystem, das einen Primärkreislauf zur Aufnahme eines darin zirkulierenden Kühlmittels, einen Sekundärkreislauf zur Aufnahme eines darin zirkulierenden Kältemittels und einen Wärmeübertrager umfasst, der den Primärkreislauf und den Sekundärkreislauf thermisch miteinander koppelt, wobei der Primärkreislauf zu Kühlung des Antriebssystems durch Übertragung von Abwärme des Antriebssystems auf das Kühlmittel eingerichtet ist und wobei der Wärmeübertrager zur Übertragung von Wärme vom Kühlmittel des Primärkreislaufs auf das Kältemittel des Sekundärkreislaufs eingerichtet ist.

Ein derartiges Kettenfahrzeug aufweisend ein Wärmeübertragungssystem mit Primär- und Sekundärkreislauf zum Kühlen eines Antriebssystems ist allgemein bekannt. Die von dem Antriebssystem solcher Kettenfahrzeuge auf ein Kühlmittel des Primärkreislaufs übertragene Wärme wird auf ein Kältemittel eines ersten Sekundärkreislaufs zum Beheizen einer Fahrerkabine und auf ein Kältemittel eines zweiten Sekundärkreislaufs zur Abgabe an die Umgebungsluft übertragen.

Aufgabe der Erfindung ist es, ein Kettenfahrzeug der eingangs genannten Art zu schaffen, das eine verbesserte Kühlung des Antriebssystems bei gleichzeitig verbesserter Temperierung der Fahrerkabine ermöglicht.

Diese Aufgabe wird dadurch gelöst, dass der Sekundärkreislauf zur Abgabe von Wärme an die Raumluft in der Fahrerkabine sowie an die Umgebungsluft durch Abkühlen des Kältemittels eingerichtet ist. Damit ist gemeint, dass nur ein einziger Sekundärkreislauf zum Abführen von Wärme vom Primärkreislauf vorgesehen ist. Die Verwendung eines Sekundärkreislaufs sowohl zum Beheizen der Fahrerkabine als auch zur Abgabe von Wärme an die Umgebungsluft kann mehrere Vorteile gegenüber der Verwendung von zwei Sekundärkreisläufen ermöglichen. Die Einsparung eines Sekundärkreislaufs ermöglicht einen einfacheren Aufbau des Wärmeübertragungssystems und einen geringeren Installationsaufwand sowie geringere Kosten und Gewicht. Zudem weist das Wärmeübertragungssystem nur mehr einen einzigen Wärmeübergang vom Kühlmittel zum Kältemittel bzw. nur einen einzigen Wärmeübertrager und damit eine höhere Effizienz der Wärmeübertragung auf. Dadurch kann Wärme vom Primärkreislauf auf den Sekundärkreislauf effizienter übertragen und in vorteilhafter Weise zur Beheizung der Fahrerkabine genutzt oder gegebenenfalls in die Umgebung abgeführt werden. Gleichzeitig kann dadurch mehr Wärme vom Antriebssystem des Kettenfahrzeugs abgeführt werden, wodurch eine Kühlleistung des Primärkreislaufs steigt. Der Wärmeübertrager kann auch als Wärmetauscher bezeichnet werden. Des Weiteren können der Primärkreislauf und der Sekundärkreislauf auch als Kühlmittelkreislauf bzw. Kältemittelkreislauf bezeichnet werden.

In Ausgestaltung der Erfindung weist der Sekundärkreislauf zwei hintereinander, d.h. seriell, geschaltete Kondensatoren zur Wärmeabgabe auf und ist zum Führen des Kältemittels nacheinander durch die beiden Kondensatoren hindurch eingerichtet. Dabei ist ein erster Kondensator der Fahrerkabine zur Abgabe von Wärme an die Raumluft in der Fahrerkabine und ein zweiter Kondensator der Umgebung zur Abgabe von Wärme an die Umgebungsluft zugeordnet. Die Kondensatoren ermöglichen eine effiziente Wärmeabgabe vom Kältemittel an die Raumluft und an die Umgebungsluft. Bei flacher Bauart lassen sich die Kondensatoren einfach an geeigneten Positionen am Kettenfahrzeug positionieren. Der Einsatz von zwei Kondensatoren ermöglicht eine hohe Wärmeabgabe des Kältemittels im Sekundärkreislauf. Wenn der eine Kondensator Wärme an die Umgebung abgibt, kondensiert das Kältemittel bereits dort, so dass der andere Kondensator der Fahrerkabine kalt bleibt, wenn dort kein Heizbedarf besteht. Wenn Heizbedarf besteht, dann gibt der der Fahrerkabine zugeordnete Kondensator Wärme an die Fahrerkabine ab. Die Bezeichnung der Kondensatoren als "erster" und "zweiter" dient lediglich deren Unterscheidung und definiert insbesondere keine Reihenfolge der Anordnung im Sekundärkreislauf. Mit anderen Worten kann das Kältemittel den ersten und den zweiten Kondensator in beliebiger Reihenfolge durchströmen, d.h. zunächst durch den der Umgebung und dann durch den der Fahrerkabine zugeordneten Kondensator, oder umgekehrt. Der Kondensator kann auch als Verflüssiger bezeichnet werden.

Die beiden Kondensatoren können bei einer alternativen Ausgestaltung auch in Form eines einzelnen Kondensators mit zwei Kondensatorbereichen ausgebildet sein, wobei je ein Kondensatorbereich der Fahrerkabine und der Umgebung zugeordnet ist. Das Kältemittel wird nacheinander durch die beiden Kondensatorbereiche hindurchgeführt. Über den jeweiligen Kondensatorbereich ist eine Abgabe von Wärme in die Fahrerkabine und an die Umgebung möglich.

In weiterer Ausgestaltung der Erfindung ist im Sekundärkreislauf wenigstens ein vom Kältemittel durchströmter Kondensator und wenigstens ein Lüfter vorgesehen, der zur Erzeugung eines Luftstroms über den Kondensator zur Übertragung von Wärme vom Kältemittel auf den Luftstrom zur Abfuhr der Wärme mittels des erwärmten Luftstroms an die Raumluft der Fahrerkabine und an die Umgebungsluft eingerichtet ist. Hierzu ist der Kondensator im Strömungsweg des Luftstroms angeordnet. Die Verwendung eines Lüfters zur Erzeugung eines Luftstroms zur Kühlung der Kondensatoren stellt eine einfache Realisierung der Kühlung der Kondensatoren dar, insbesondere gegenüber beispielsweise wassergekühlten Kondensatoren, die eine Wasserzufuhr und Wasserabfuhr benötigen. Zudem ermöglicht die Kühlung des Kondensators mittels des Luftstroms eine vorteilhafte Verteilung der am Kondensator abgegebenen Wärme in der Fahrerkabine. Optional kann zusätzlich bei einer Fortbewegung des Kettenfahrzeugs ein Fahrtwind zu Kühlung des Kondensators genutzt werden. Falls im Sekundärkreislauf zwei Kondensatoren vorgesehen sind, kann der durch den Lüfter erzeugte Luftstrom zur Kühlung beider Kondensatoren verwendet werden. Der Lüfter kann auch als Ventilator oder Gebläse bezeichnet werden.

In weiterer Ausgestaltung der Erfindung weist das Kettenfahrzeug eine Steuerklappe zum Leiten des durch den Lüfter erzeugten Luftstroms über die Kondensatoren und einen Stellantrieb zum Ansteuern der Steuerklappe auf. Die Steuerklappe ist dazu eingerichtet, den Luftstrom in einen ersten Strömungsanteil, der über den ersten Kondensator leitbar ist, und einer zweiten Strömungsanteil aufzuteilen, der über den zweiten Kondensator leitbar ist. Durch die Verwendung der Steuerklappe ist bei Verwendung nur eines Lüfters der Luftstrom in zwei Strömungsanteile aufteilbar und über einen jeweiligen Kondensator zur Wärmeabfuhr leitbar. Durch die Steuerklappe kann vorteilhafterweise das Verhältnis der beiden Strömungsanteile zueinander und damit das Verhältnis der Wärmeabgabe am ersten und am zweiten Kondensator eingestellt werden. Vorteilhaft steuert der Stellantrieb die Steuerklappe abhängig vom Heizbedarf in der Fahrerkabine und vom Kühlbedarf des Antriebssystems an und bewirkt eine entsprechende Verteilung der abgegebenen Wärme bzw. der Strömungsanteile. Ein etwaiger Wärmeüberschuss kann über den der Umgebung zugeordneten Kondensator abgegeben werden. Optional kann ein Volumenstrom des durch den Lüfter erzeugten Luftstroms durch entsprechende Ansteuerung des Lüfters abhängig vom Heizbedarf und vom Kühlbedarf eingestellt werden.

Bei einer alternativen Ausgestaltung sind zwei oder mehr Lüfter vorgesehen, von denen je einer dem ersten und dem zweiten Kondensator zugeordnet ist. Die den Kondensatoren zugeordneten Strömungsanteile können dann unabhängig voneinander durch entsprechende Ansteuerung des jeweiligen Lüfters eingestellt werden. Eine Steuerklappe samt Stellantrieb kann bei dieser Ausgestaltung entfallen.

In weiterer Ausgestaltung der Erfindung sind der Kondensator und der Lüfter in der Fahrerkabine angeordnet. Die Anordnung in der Fahrerkabine ermöglicht einen kurzen Weg des Luftstroms vom Lüfter über den Kondensator und in die Fahrerkabine und damit eine effektive Beheizung der Fahrerkabine. Zudem ermöglicht das Anordnen der Komponenten in der Fahrerkabine eine kompakte Bauweise. Bei Verwendung von zwei Kondensatoren im Sekundärkreislauf sind vorteilhaft beide Kondensatoren in der Fahrerkabine positioniert. Besonders vorteilhaft ist der der Umgebung zugeordnete, zweite Kondensator nahe einer Außenwand oder einem Boden der Fahrerkabine angeordnet, sodass bei Verwendung eines einzigen Lüfters der Luftstrom einerseits auf kurzem Weg über den ersten Kondensator und in die Fahrerkabine für eine unmittelbare Beheizung der Fahrerkabine und andererseits auf kurzem Weg über den zweiten Kondensator und in die Umgebung zur unmittelbaren Wärmeabfuhr an die Umgebungsluft gelangen kann. Besonders vorteilhaft ist auch die Steuerklappe in der Fahrerkabine angeordnet und dazu eingerichtet, einen Strömungsweg des Luftstroms vom Lüfter in die Umgebung zu verschließen.

In weiterer Ausgestaltung der Erfindung realisiert der Sekundärkreislauf einen Wärmepumpenkreislauf und weist hierzu einen Verdampfer, einen Kompressor, wenigstens einen Kondensator und eine Drossel auf. Der Verdampfer ist zur Übertragung von Wärme vom Kühlmittel des Primärkreislaufs auf das Kältemittel des Sekundärkreislaufs eingerichtet und der Kondensator ist zur Abgabe von Wärme vom Kältemittel an die Raumluft in der Fahrerkabine und an die Umgebungsluft eingerichtet. Durch die Wärmepumpe ist eine Beheizung der Fahrerkabine in energiesparender Weise möglich. Der Verdampfer des Wärmepumpenkreislaufs wird durch den Wärmeübertrager bereitgestellt, der den Primärkreislauf mit dem Sekundärkreislauf thermisch koppelt, und ermöglicht die Übertragung von Wärme vom Kühlmittel auf das Kältemittel durch Verdampfen des Kältemittels im Verdampfer bzw. Wärmeübertrager. Der Kompressor kann auch als Verdichter bezeichnet werden.

Optional ist im Sekundärkreislauf eine Heizeinrichtung vorgesehen. Diese kann ein Zuführen von Wärme zur Raumluft der Fahrerkabine unterstützen.

In weiterer Ausgestaltung der Erfindung ist im Primärkreislauf eine Heizeinrichtung vorgesehen, die zur Erwärmung des Kühlmittels eingerichtet ist. Diese Anordnung ermöglicht neben dem Abführen von Wärme vom Antriebssystem eine zusätzliche Wärmezufuhr in den Sekundärkreislauf, insbesondere zum Beheizen der Fahrerkabine. Das bedeutet, die Heizeinrichtung kann eine Wärmezufuhr zum Sekundärkreislauf zwecks Beheizung der Fahrerkabine unterstützen oder ermöglichen. Insbesondere kann dadurch auch bei einem (noch) kalten Antriebssystem, beispielsweise unmittelbar nach dem Start des Antriebssystems, die Fahrerkabine geheizt werden. Zudem ermöglicht die Heizeinrichtung eine Wärmezufuhr zum Primärkreislauf, insbesondere zum Antriebssystem. Dies kann beispielsweise erwünscht sein, um das Antriebssystem in kürzerer Zeit auf Betriebstemperatur zu bringen oder um das Antriebssystem auch bei sehr niedrigen Umgebungstemperaturen auf Betriebstemperatur zu halten.

In weiterer Ausgestaltung der Erfindung ist das Kettenfahrzeug als elektrisch angetriebenes Kettenfahrzeug ausgeführt mit wenigstens einer elektrischen Antriebseinrichtung zum Bereitstellen von Antriebsleistung und wenigstens einem elektrischen Energiespeicher zum Bereitstellen von elektrischer Energie zur Antriebseinrichtung. Der Primärkreislauf ist zur Kühlung der Antriebseinrichtung und/oder des Energiespeichers eingerichtet. Durch die Ausführung als elektrisch angetriebenes Kettenfahrzeug ist ein emissionsarmer Betrieb des Kettenfahrzeugs möglich. Die Antriebseinrichtung und der Energiespeicher bilden das Antriebssystem des Kettenfahrzeugs, gegebenenfalls gemeinsam mit weiteren Komponenten, insbesondere mit einem oder mehreren Umrichtern. Vorteilhaft ist der elektrische Energiespeicher eine Batterie oder ein Akkumulator.

In weiterer Ausgestaltung der Erfindung ist der Primärkreislauf in einen ersten Primärkreislaufzweig, der zum Kühlen der Antriebseinrichtung eingerichtet ist, und einen zweiten Primärkreislaufzweig aufgeteilt, der zum Kühlen des Energiespeichers und zur Übertragung von Wärme vom Kühlmittel auf das Kältemittel des Sekundärkreislaufs eingerichtet ist. Der erste und der zweite Primärkreislaufzweig sind zum Austausch des Kühlmittels eingerichtet. Dies ermöglicht ein zumindest teilweises Entkoppeln der Kühlung der Antriebseinrichtung von der Kühlung des Energiespeichers. Dadurch brauchen die Antriebseinrichtung und der Energiespeicher nicht auf dieselbe Temperatur gekühlt werden. In anderen Worten brauchen die Antriebseinrichtung und der Energiespeicher nicht denselben Kühlbedarf aufweisen. Vorteilhaft weist der Primärkreislauf einen Kreislaufabschnitt auf, der beiden Primärkreislaufzweigen gemeinsam ist, d.h. den diese teilen, sodass in dem gemeinsamen Kreislaufabschnitt das Kühlmittel des ersten und des zweiten Primärkreislaufzweigs gemeinsam fließen und sich dabei durchmischen. Besonders vorteilhaft ist der Kreislaufabschnitt in Strömungsrichtung des Kühlmittels hinter Komponenten des Antriebssystems, wie der Antriebseinrichtung und/oder dem Energiespeicher, angeordnet, sodass eine größtmögliche thermische Entkopplung der beiden Primärkreislaufzweige erreicht werden kann, ohne dass beispielsweise die Abwärme der Antriebseinrichtung zu einer übermäßigen Erwärmung des Energiespeichers führt.

Vorteilhaft ist die Heizeinrichtung im zweiten Primärkreislaufzweig aufweisend den Wärmeübertrager und den Energiespeicher vorgesehen, sodass eine möglichst unmittelbare Wärmezufuhr zum Sekundärkreislauf und zum Energiespeicher bei gleichzeitig möglichst geringer Wärmezufuhr zum ersten Primärkreislaufzweig mit der Antriebseinrichtung bereitgestellt ist.

In weiterer Ausgestaltung der Erfindung weist das Kühlmittel im ersten Primärkreislaufzweig einen höheren durchschnittlichen Volumenstrom und eine höhere durchschnittliche Temperatur als das Kühlmittel im zweiten Primärkreislaufzweig auf. Dadurch kann im ersten Primärkreislaufzweig von der Antriebseinrichtung mehr Wärme bei einer höheren Kühlmitteltemperatur abgeführt werden als im zweiten Primärkreislaufzweig vom Energiespeicher bei einer niedrigeren Kühlmitteltemperatur. Vorteilhaft ist im jeweiligen Primärkreislaufzweig die Temperatur und der Volumenstrom des Kühlmittels auf den Kühlbedarf und die Betriebstemperatur der im Primärkreislaufzweig vorgesehenen, zu kühlenden Komponenten abgestimmt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt eine Perspektivansicht eines erfindungsgemäßen Kettenfahrzeugs mit einer Fahrerkabine,
- Fig. 2: eine Innenansicht der Fahrerkabine des Kettenfahrzeugs nach Fig. 1,
- Fig. 3: eine Perspektivansicht der Fahrerkabine des Kettenfahrzeugs nach Fig. 1 von schräg unten,
- Fig. 4: schematisch einen Ausschnitt eines Sekundärkreislaufs eines Wärmeübertragungssystems des Kettenfahrzeugs nach Fig. 1,
- Fig. 5: schematisch einen Ausschnitt eines alternativen Sekundärkreislaufs des Wärmeübertragungssystems des Kettenfahrzeugs nach Fig. 1,
- Fig. 6: eine blockdiagrammartige Darstellung des Wärmeübertragungssystems des Kettenfahrzeugs nach Fig. 1.

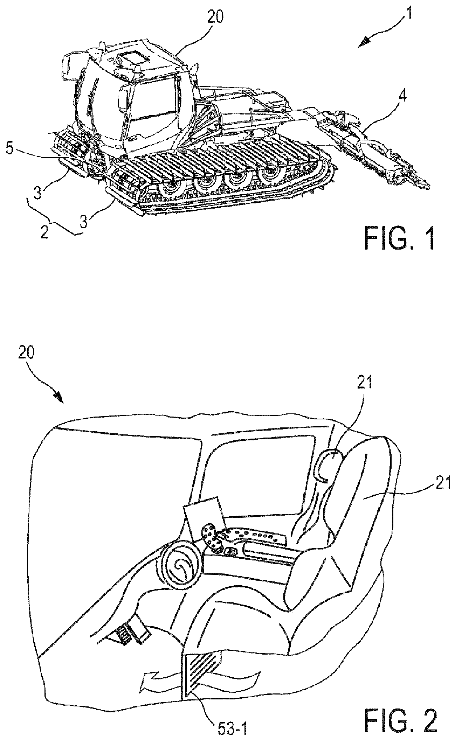

Fig. 1 zeigt ein erfindungsgemäßes ziviles Kettenfahrzeug in Form einer Pistenraupe 1, die zur Fortbewegung auf einer Piste eingerichtet ist. Zu diesem Zweck weist die Pistenraupe 1 ein Kettenfahrwerk 2 auf, das auf einander gegenüberliegenden Seiten eines Tragrahmens 5 der Pistenraupe 1 jeweils ein Kettenlaufwerk 3 umfasst. Die Pistenraupe 1 ist mit einem Antriebssystem 10 ausgestattet, das zum Antreiben der Kettenlaufwerke 3 eingerichtet ist. Hierzu weist das Antriebssystem 10 jeweils einen, den Kettenlaufwerken 3 zugeordneten Fahrantrieb und jeweils einen den Fahrantrieben zugeordneten Elektromotor M1, M3 sowie jeweils einen den Elektromotoren M1, M3 zugeordneten Umrichter U1, U3 auf. Ferner weist die Pistenraupe 1 einen weiteren Elektromotor M2 zum Antrieb eines Fräsantriebs, der einer an der Pistenraupe 1 vorgesehenen Heckfräse 4 zugeordnet ist, sowie einen dem Elektromotor M2 zugeordneten Umrichter U2 auf. Die Umrichter U1 bis U3 zählen zu einer für den Betrieb der Elektromotoren M1 bis M3 notwendige Leistungselektronik. Die Fahrantriebe und der Fräsantrieb sind als hydraulische Antriebseinheiten ausgebildet. Die Antriebseinheiten bilden mit dem jeweils zugeordneten Elektromotor M1-3 und Umrichter U1-3 eine Antriebseinrichtung 11-1, 11-2, 11-3 der Pistenraupe 1. Zudem weist die Pistenraupe 1 zwei elektrische Energiespeicher in Form von Traktionsbatterien B1, B2 zur Speisung der Elektromotoren M1-3 mit elektrischer Energie auf. Die Fahr- und Fräsantriebe, die Umrichter U1-3, die Elektromotoren M1-3 und die Traktionsbatterien B1, B2 sind samt einer Fahrerkabine 20 auf dem Tragrahmen 5 montiert.

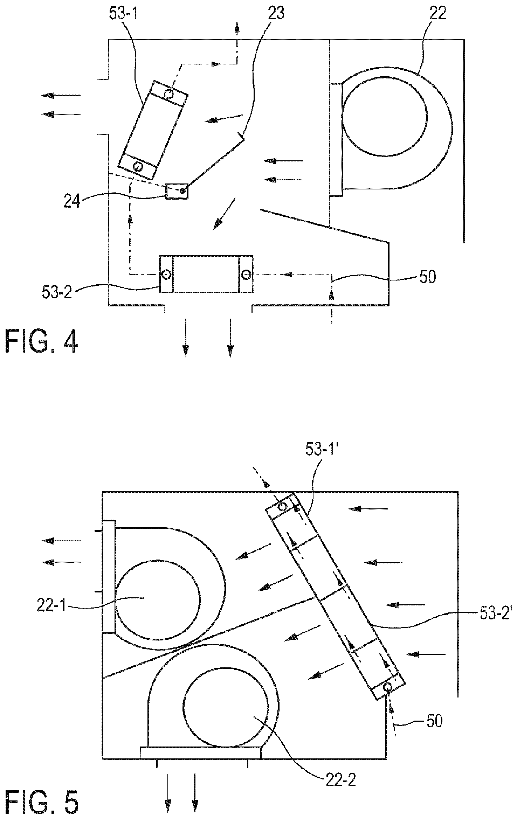

Dem Antriebssystem 10 und der Fahrerkabine 20 ist ein Wärmeübertragungssystem 30 gemäß den Fig. 4 bis 6 zugeordnet. Das Wärmeübertragungssystem 30 weist einen Primärkreislauf 40 auf, in dem ein Kühlmittel zirkuliert. Der Primärkreislauf 40 ist den Antriebseinrichtungen 11-1, 11-2, 11-3 und den Traktionsbatterien B1, B2 zu deren Kühlung zugeordnet. Zu diesem Zweck nimmt das in den Primärkreislauf 40 zirkulierende Kühlmittel Abwärme des Antriebssystems 10 auf und führt die Wärme ab. Zur Kühlung der Antriebseinrichtungen 11-1, 11-2, 11-3 wird das Kühlmittel so geführt, dass es zunächst Abwärme von den Elektromotoren M1-3 und dann Abwärme der Umrichter U1-3 aufnimmt und abführt.

Neben dem Primärkreislauf 40 weist das Wärmeübertragungssystem 30 einen Sekundärkreislauf 50 auf. Der Sekundärkreislauf 50 ist mit dem Primärkreislauf 40 über einen Wärmeübertrager 31 thermisch gekoppelt. Mittels des Wärmeübertragers 31 ist Wärme von dem Kühlmittel auf ein in dem Sekundärkreislauf 50 zirkulierendes Kältemittel übertragbar. Vorteilhaft enthält das Kühlmittel Wasser, Glykol oder eine Mischung der beiden und das Kältemittel enthält das Kältemittel R-134a.

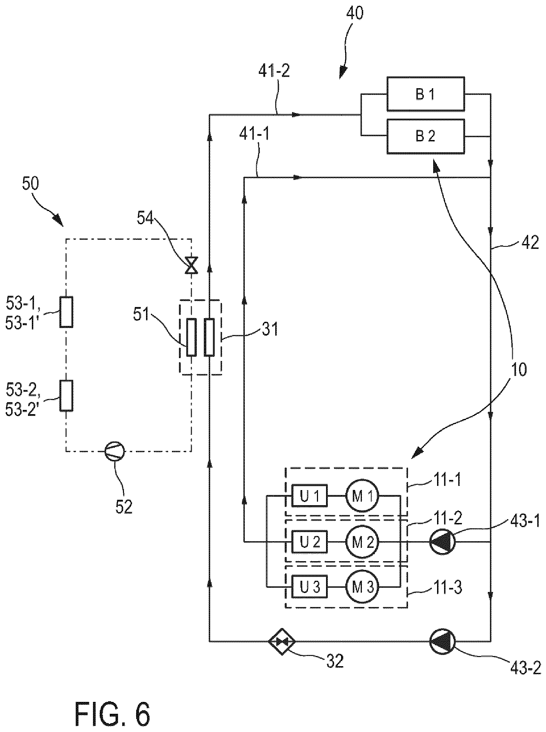

Der Sekundärkreislauf 50 ist als ein Wärmepumpenkreislauf ausgebildet und weist hierzu gemäß Fig. 6 einen Verdampfer 51, einen Kompressor 52, zwei Kondensatoren 53-1, 53-2; 53-1', 53-2' und eine Drossel 54 auf. Der Verdampfer 51 fungiert als Wärmeübertrager 31, wobei die Wärme vom Kühlmittel des Primärkreislaufs 40 auf das Kältemittel des Sekundärkreislaufs 50 durch Verdampfen des Kältemittels übertragen wird, und ist in Form eines Plattenwärmetauschers ausgebildet. Nach dem Verdampfen wird das Kältemittel nacheinander durch den Kompressor 52, durch den zweiten Kondensator 53-2; 53-2' und durch den ersten Kondensator 53-1; 53-1' geleitet, wobei in den Kondensatoren 53-1, 53-2; 53-1', 53-2' unter Kondensation des Kältemittels Wärme abgeführt wird. Nach der Kondensation des Kältemittels wird das flüssige Kältemittel in der Drossel 54 entspannt und dann wieder dem Verdampfer 51 zur Aufnahme von Wärme vom Kühlmittel zugeführt.

Der erste Kondensator 53-1; 53-1` ist der Fahrerkabine 20 zu deren Beheizung zugeordnet. Insofern wird unter Kondensation des Kältemittels im ersten Kondensator 53-1; 53-1' Wärme von dem Kältemittel an die Raumluft der Fahrerkabine 20 übertragen. Der zweite Kondensator 53-2; 53-2` ist der Umgebung bzw. der Umgebungsluft der Pistenraupe 1 zugeordnet, sodass unter Kondensation des Kältemittels im zweiten Kondensator 53-2; 53-2' Wärme an die Umgebungsluft abgegeben wird. Die über den Sekundärkreislauf 50 insgesamt abgegebene Wärmemenge ergibt sich als die Summe der über den ersten Kondensator 53-1; 53-1' und den zweiten Kondensator 53-2; 53-2' jeweils abgegebenen Wärmemenge und entspricht im Wesentlichen einer Kühlleistung des Wärmeübertragungssystems.

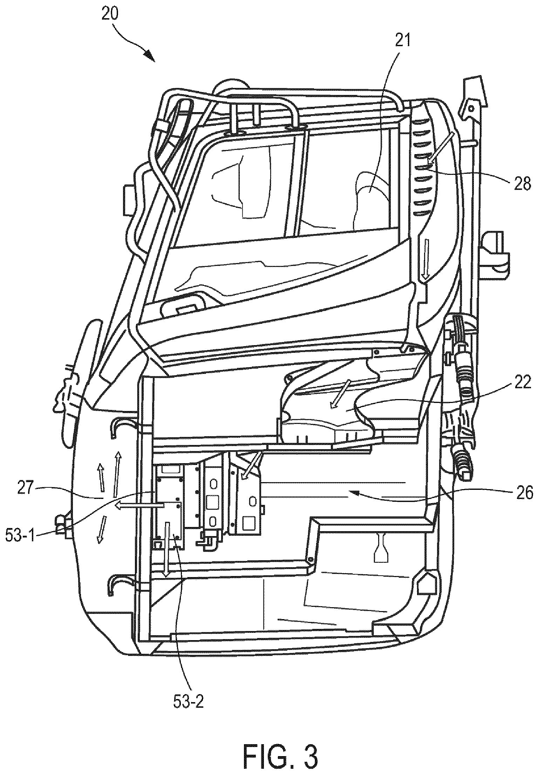

Entsprechend der in Fig. 3 gezeigten Ausführungsform, sind die Kondensatoren 53-1, 53-2 in einer Bodengruppe 26 der Fahrerkabine 20 in der Fahrerkabine 20 angeordnet. Die Bodengruppe 26 bildet einen tunnelartigen Bereich aus, in dem die Kondensatoren 53-1, 53-2 angeordnet sind. Der tunnelartige Bereich verläuft unterhalb von und mittig zu zwei in der Fahrerkabine 20 angeordneten Fahrzeugsitzen 21 und bildet somit einen Mitteltunnel. Der zweite Kondensator 53-2 ist am Boden der Bodengruppe 26 angeordnet, sodass ihn umströmende Luft in Richtung der Piste geblasen wird, auf dem sich die Pistenraupe 1 fortbewegt oder steht. Der erste Kondensator 53-1 ist oberhalb des zweiten Kondensators 53-2 angeordnet, sodass ihn umströmende Luft in Fahrtrichtung der Pistenraupe 1 nach vorn geblasen wird.

Zudem sind in der Bodengruppe 26 ein Radiallüfter 22 sowie eine über einen Stellantrieb 24 ansteuerbare Steuerklappe 23 vorgesehen. Der Radiallüfter 22 ist hinter den Kondensatoren 53-1, 53-2 und seitlich zu diesen versetzt angeordnet, wie in Fig. 4 zu sehen. Der Radiallüfter 22 erzeugt einen Luftstrom, der über die Kondensatoren 53-1, 53-2 geleitet wird. Beim Umströmen der Kondensatoren 53-1, 53-2 findet eine Übertragung von Wärme vom die Kondensatoren 53-1, 53-2 durchströmenden Kältemittel auf die die Kondensatoren 53-1, 53-2 umströmende Luft statt und die Wärme wird dann mittels des Luftstroms weiter in die Fahrerkabine 20 geleitet bzw. an die Umgebung abgeführt.

Die über den zweiten Kondensator 53-2 strömende Luft wird nach Umströmen des zweiten Kondensators 53-2 nach unten in Richtung des Fahrgestells bzw. der Piste unmittelbar in die Umgebung geleitet. Die über den ersten Kondensator 53-1 strömende Luft wird nach Umströmen des ersten Kondensators 53-1 in einen frontseitig in der Fahrerkabine 20 angeordneten Luftverteilerkasten 27 geleitet, der die erwärmte Luft in der Fahrerkabine 20 verteilt. Der Radiallüfter 22 saugt die den Kondensatoren 53-1, 53-2 zuzuführende Frischluft über Lufteinlassschlitze 28 in der B-Säule der Fahrerkabine 20 aus der Umgebung an, saugt sie durch einen Luftkanal in der B-Säule und bläst sie in mittels der Steuerklappe 23 eingestellten Strömungsanteilen über die beiden Kondensatoren 53-1, 53-2. Der Luftstrom durch die Lufteinlassschlitze 28, durch den Luftkanal und den Radiallüfter 22 hindurch und über die Kondensatoren 53-1, 53-2 in die Umgebung bzw. in den Luftverteilerkasten 27 ist in Fig. 3 durch entsprechend gerichtete Pfeile veranschaulicht.

Fig. 2 zeigt eine alternative Anordnung der Kondensatoren 53-1, 53-2. Bei dieser Ausführungsform ist der erste Kondensator 53-1 unterhalb eines Fahrzeugsitzes 21 in der Fahrerkabine 20 zur Abgabe von Wärme unmittelbar in die Fahrerkabine 20 und der zweite Kondensator 53-2 an einer Außenwand oder einem Boden der Fahrerkabine 20 (nicht gezeigt) zur Abgabe von Wärme unmittelbar in die Umgebung positioniert. Die Anordnung des ersten Kondensators 53-1 unter dem Fahrzeugsitz 21 kann bei Pistenraupen 1 mit lediglich einem einzigen, für einen Fahrer der Pistenraupe vorgesehenen Fahrzeugsitz 21 in der Fahrerkabine 20 vorteilhaft sein. Die erwärmte Luft kann dann unmittelbar einer auf dem Fahrzeugsitz 21 sitzenden Bedienperson der Pistenraupe 1 zugeführt werden.

Gemäß der in Fig. 4 gezeigten Ausführungsform dient die Steuerklappe 23 zum Aufteilen des Luftstroms in über den ersten Kondensator 53-1 und den zweiten Kondensator 53-2 strömende Strömungsanteile. Dabei kann die Steuerklappe 23 wahlweise im Bereich zwischen einer ersten Endstellung und einer zweiten Endstellung verstellt werden. In der ersten Endstellung schließt die Steuerklappe 23 den Strömungsweg des Luftstroms vom Radiallüfter 22 in die Umgebung vollständig ab, sodass der Luftstrom vollständig über den ersten Kondensator 53-1 und in die Fahrerkabine 20 geleitet wird, und in der zweiten Endstellung schließt sie den Strömungsweg des Luftstroms vom Radiallüfter 22 in die Fahrerkabine 20 vollständig ab, sodass der Luftstrom vollständig über den zweiten Kondensator 53-2 und in die Umgebung geleitet wird. Die Steuerklappe 23 kann jede Stellung zwischen der ersten und zweiten Endstellung einnehmen und so den Luftstrom in entsprechende Strömungsanteile aufteilen.

Fig. 5 zeigt eine alternative Ausführungsform. Bei dieser Ausführungsform ist ein einzelner Kondensator mit zwei Kondensatorbereichen 53-1', 53-2' im Sekundärkreislauf 50 vorgesehen, wobei ein erster Kondensatorbereich 53-1' der Fahrerkabine 20 zur Abgabe von Wärme an die Raumluft in der Fahrerkabine 20 und ein zweiter Kondensatorbereich 53-2' der Umgebung zur Abgabe von Wärme an die Umgebungsluft zugeordnet ist. Zur getrennten Abgabe von Wärme in die Fahrerkabine 20 und an die Umgebung werden zwei Luftströmungen getrennt über den ersten und den zweiten Kondensatorbereich 53-1', 53-2' geleitet. In Luftströmungsrichtung hinter den Kondensatorbereichen 53-1', 53-2' sind hierzu zwei Radiallüfter 22-1', 22-2` vorgesehen, welche die Luftströmungen über den jeweiligen Kondensatorbereich 53-1', 53-2' erzeugen. Die erwärmte Luft blasen die Radiallüfter 22-1', 22-2` dann in die Fahrerkabine 20 bzw. in die Umgebung. Die zwei Kondensatorbereiche 53-1', 53-2` erfüllen somit dieselbe Funktion wie die zwei Kondensatoren 53-1, 53-2 der in Fig. 4 gezeigten Ausführungsform.

Durch entsprechende Ansteuerung der Radiallüfter 22-1', 22-2' unabhängig voneinander können dem jeweiligen Kondensatorbereich 53-1', 53-2' zugeordnete individuelle Luftströmungen bzw. Strömungsanteile erzeugt werden. Beispielsweise kann bei keinem Heizbedarf in der Fahrerkabine 20 der dem ersten Kondensatorbereich 53-1' zugeordnete Radiallüfter 22-1' stillstehen, während der dem zweiten Kondensatorbereich 53-2` zugeordnete Radiallüfter 22-2` entsprechend einem Kühlbedarf des Antriebssystems 10 angetrieben wird. Entsprechend kann in dem Fall, dass der Heizbedarf in der Fahrerkabine 20 einem Kühlbedarf des Antriebssystems entspricht, der zweite Radiallüfter 22-2' stillstehen und der erste Radiallüfter 22-1' entsprechend des Heizbedarfs bzw. des Kühlbedarfs angetrieben werden. Durch entsprechende Ansteuerung der beiden Radiallüfter 22-1', 22-2` können auf diese Weise Luftströmungen in beliebigen Strömungsanteilen über die beiden Kondensatorbereiche 53-1', 53-2` erzeugt werden und somit die Funktion des einzelnen Radiallüfters 22, der Steuerklappe 23 und des Stellantrieb 24 der Ausführungsform von Fig. 4 in alternativer Weise erfüllt werden.

In einer nicht gezeigten Ausführungsform sind im Sekundärkreislauf 50 zwei Kondensatoren 53-1, 53-2 vorgesehen und zwei Radiallüfter 22-1', 22-2' sind in Strömungsrichtung hinter einem jeweiligen zugeordneten Kondensator 53-1, 53-2 angeordnet und erzeugen eine jeweilige Luftströmung über den Kondensator 53-1, 53-2.

Unabhängig davon, welche der vorhergehend beschriebenen Ausführungsformen umgesetzt ist, kann die im Primärkreislauf 40 auf das Kühlmittel übertragene Wärme des Antriebssystems 10 zur Beheizung der Fahrerkabine 20 mittels des Sekundärkreislaufs 50 verwendet werden. Übersteigt der Kühlbedarf des Antriebssystems 10 einen Heizbedarf der Fahrerkabine 20, d.h. ist die im Primärkreislauf 40 aufzunehmende Wärme vom Antriebssystem 10 größer als die im Sekundärkreislauf 50 in die Fahrerkabine 20 abzugebende Wärmemenge, kann der Überschuss an Wärme, d.h. die Differenz zwischen Kühl- und Heizbedarf, in die Umgebung geleitet werden.

Hierzu verstellt der Stellantrieb 24 gemäß der in Fig. 4 gezeigten Ausführungsform die Steuerklappe 23 in eine entsprechende Stellung, in der sie den durch den Radiallüfter 22 erzeugten Luftstrom in die den Kondensatoren 53-1, 53-2 zugeordneten Strömungsanteile aufteilt, sodass eine in die Fahrerkabine 20 abgegebene Wärmemenge einem gewünschten Heizbedarf entspricht und die übrige Wärme an die Umgebung abgegeben wird.

Entsprechend erfolgt bei der in Fig. 5 gezeigten Ausführungsform eine Ansteuerung des ersten Radiallüfters 22-1', sodass der Heizbedarf in der Fahrerkabine 20 gedeckt ist, und eine Ansteuerung des zweiten Radiallüfters 22-2', sodass die über beide Kondensatoren 53-1, 53-2 bzw. über beide Kondensatorbereiche 53-1', 53-2' abgegebene Wärme den Kühlbedarf des Antriebssystems bedient.

Wie in Fig. 6 gezeigt, ist der Primärkreislauf 40 in zwei Primärkreislaufzweige 41-1, 41-2 aufgeteilt, wobei der erste Primärkreislaufzweig 41-1 den Antriebseinrichtungen 11-1, 11-2, 11-3 und der zweite Primärkreislaufzweig 41-2 den Traktionsbatterien B1, B2 jeweils zu deren Kühlung zugeordnet ist. Der Wärmeübertrager 31 ist im zweiten Primärkreislaufzweig 41-2 vorgesehen, sodass Wärme aus dem Primärkreislauf 40 über den zweiten Primärkreislaufzweig 41-2 abführbar ist. Der erste und zweite Primärkreislaufzweig 41-1, 41-2 sind über einen gemeinsamen Kreislaufabschnitt 42 miteinander verbunden. Das bedeutet, dass in Strömungsrichtung des Kühlmittels am Beginn des Kreislaufabschnitts 42 der erste und der zweite Primärkreislaufzweig 41-1, 41-2 zusammenführen und der Kreislaufabschnitt 42 sich am Ende des Kreislaufabschnitts 42 in die beiden Primärkreislaufzweige 41-1, 41-2 aufteilt. Bei Durchströmen des Kreislaufabschnitts 42 mischen sich das im ersten Primärkreislaufzweig 41-1 und das im zweiten Primärkreislaufzweig 41-2 geführte Kühlmittel.

In den Primärkreislaufzweigen 41-1, 41-2 ist jeweils eine Kühlmittelpumpe 43-1, 43-2 vorgesehen, welche die Zirkulation des Kühlmittels im jeweiligen Primärkreislaufzweig 41-1, 41-2 erzeugt. Durch eine unterschiedliche Dimensionierung oder Ansteuerung der Kühlmittelpumpen 43-1, 43-2 können in den Primärkreislaufzweigen 41-1, 41-2 unterschiedliche Volumenströme erzeugt werden. So beträgt im ersten Primärkreislaufzweig 41-1 der Volumenstrom etwa 60 Liter pro Minute und im zweiten Primärkreislaufzweig 41-2 etwa 20 Liter pro Minute. Zudem kann eine Betriebstemperatur der Umrichter U1-3 und der Elektromotoren M1-3 höher als eine Betriebstemperatur der Traktionsbatterien B1, B2 sein, sodass eine Temperatur des Kühlmittels im ersten Primärkreislaufzweig 41-1 größer ist als eine Temperatur des Kühlmittels im zweiten Primärkreislaufzweig 41-2. Konkret beträgt die Temperatur des Kühlmittels im ersten Primärkreislaufzweig 41-1 etwa 30 °C und im zweiten Primärkreislaufzweig 41-2 etwa 21 °C.

Im gemeinsamen Kreislaufabschnitt 42 treffen die den jeweiligen Primärkreislaufzweigen 41-1, 41-2 zugeordneten, unterschiedlich temperierten Kühlmittel aufeinander und durch die Vermischung erfolgt ein Wärmeaustausch bzw. eine Temperaturangleichung. Dabei überträgt sich Wärme vom von den Antriebseinrichtungen 11-1, 11-2, 11-3 kommenden Kühlmittel auf das von den Traktionsbatterien B1, B2 kommende Kühlmittel. Nach Aufteilung des Kühlmittels am Ende des Kreislaufabschnitts 42 in die beiden Primärkreislaufzweige 41-1, 41-2 gibt das im zweiten Primärkreislaufzweig 41-2 strömende Kühlmittel bei Durchlaufen des Wärmeübertragers 31 Wärme auf das Kältemittel im Sekundärkreislauf 50 ab und wird danach erneut den Traktionsbatterien B1, B2 zugeführt, während das im ersten Primärkreislaufzweig 41-1 strömende Kühlmittel erneut den Antriebseinrichtungen 11-1, 11-2, 11-3 zugeführt wird.

Im zweiten Primärkreislaufzweig 41-2 ist ferner eine Heizeinrichtung 32 vorgesehen. Mit der Heizeinrichtung 32 lässt sich das Kühlmittel im zweiten Primärkreislaufzweig 41-2 erwärmen. Durch Übertragung der Wärme vom zweiten Primärkreislaufzweig 41-2 auf den Sekundärkreislauf 50 mittels des Wärmeübertragers 31 kann die durch die Heizeinrichtung 32 dem Primärkreislauf 40 zugeführte Wärme mittelbar zur Beheizung der Fahrerkabine 20 verwendet werden. Dadurch kann der Kältekreis und somit die Beheizung der Fahrerkabine 20 auch bei niedrigen Kaltstart-Temperaturen betrieben werden. Eine Kühlwassertemperatur kann auf ein passendes Niveau für den Kältekreis angehoben werden, insbesondere durch einen Vorwärmprozess. Des Weiteren kann die über die Heizeinrichtung 32 zugeführte Wärme zur Temperaturregulierung der dem Wärmeübertrager 31 nachgeschalteten Traktionsbatterien B1, B2 und gegebenenfalls auch zur Temperaturregulierung der Antriebseinrichtungen 11-1, 11-2, 11-3 verwendet werden.

## Patentansprüche

1. Ziviles Kettenfahrzeug (1) aufweisend ein Antriebssystem (10), das zum Bereitstellen von Antriebsenergie eingerichtet ist, eine Fahrerkabine (20) und ein dem Antriebssystem (10) und der Fahrerkabine (20) zugeordnetes Wärmeübertragungssystem (30), das einen Primärkreislauf (40) zur Aufnahme eines darin zirkulierenden Kühlmittels, einen Sekundärkreislauf (50) zur Aufnahme eines darin zirkulierenden Kältemittels und einen Wärmeübertrager (31) umfasst, der den Primärkreislauf (40) und den Sekundärkreislauf (50) thermisch miteinander koppelt, wobei der Primärkreislauf (40) zur Kühlung des Antriebssystems (10) durch Übertragung von Abwärme des Antriebssystems (10) auf das Kühlmittel eingerichtet ist und wobei der Wärmeübertrager (31) zur Übertragung von Wärme vom Kühlmittel des Primärkreislaufs (40) auf das Kältemittel des Sekundärkreislaufs (50) eingerichtet ist, **dadurch gekennzeichnet, dass** der Sekundärkreislauf (50) zur Abgabe von Wärme an die Raumluft in der Fahrerkabine (20) sowie an die Umgebungsluft durch Abkühlen des Kältemittels eingerichtet ist.

2. Ziviles Kettenfahrzeug (1) nach Anspruch 1, **dadurch gekennzeichnet, dass** der Sekundärkreislauf (50) zwei hintereinander geschaltete Kondensatoren (53-1, 53-2; 53-1', 53-2') zur Wärmeabgabe aufweist und zum Führen des Kältemittels nacheinander durch die beiden Kondensatoren (53-1, 53-2; 53-1', 53-2') hindurch eingerichtet ist, wobei ein erster Kondensator (53-1; 53-1') der Fahrerkabine (20) zur Abgabe von Wärme an die Raumluft in der Fahrerkabine (20) zugeordnet ist und wobei ein zweiter Kondensator (53-2; 53-2') der Umgebung zur Abgabe von Wärme an die Umgebungsluft zugeordnet ist.

3. Ziviles Kettenfahrzeug (1) nach Anspruch 1 oder 2, **gekennzeichnet durch** wenigstens einen im Sekundärkreislauf (50) vorgesehenen, vom Kältemittel durchströmten Kondensator (53-1, 53-2; 53-1', 53-2') und wenigstens einen Lüfter (22; 22-1', 22-2'), der zur Erzeugung eines Luftstroms über den Kondensator (53-1, 53-2; 53-1', 53-2`) zur Übertragung von Wärme vom Kältemittel auf den Luftstrom zur Abfuhr der Wärme mittels des erwärmten Luftstroms an die Raumluft der Fahrerkabine (20) und an die Umgebungsluft eingerichtet ist.

4. Ziviles Kettenfahrzeug (1) nach Anspruch 2 und 3, **gekennzeichnet durch** eine Steuerklappe (23) zum Leiten des Luftstroms über die Kondensatoren (53-1, 53-2; 53-1', 53-2') und einen Stellantrieb (24) zum Ansteuern der Steuerklappe (23), wobei die Steuerklappe (23) dazu eingerichtet ist, den Luftstrom in einen ersten Strömungsanteil, der über den ersten Kondensator (53-1; 53-1') leitbar ist, und einen zweiten Strömungsanteil aufzuteilen, der über den zweiten Kondensator (53-2; 53-2') leitbar ist.

5. Ziviles Kettenfahrzeug (1) nach Anspruch 3 oder 4, **dadurch gekennzeichnet, dass** der Kondensator (53-1, 53-2; 53-1', 53-2') und der Lüfter (22; 22-1', 22-2') in der Fahrerkabine (20) angeordnet sind, und dass insbesondere die Steuerklappe (23) in der Fahrerkabine (20) angeordnet und dazu eingerichtet ist, einen Strömungsweg des Luftstroms vom Lüfter (22) in die Umgebung zu verschließen.

6. Ziviles Kettenfahrzeug (1) nach einem der vorhergehenden Ansprüche, **dadurch gekennzeichnet, dass** der Sekundärkreislauf (50) einen Wärmepumpenkreislauf realisiert und hierzu einen Verdampfer (51), einen Kompressor (52), wenigstens einen Kondensator (53-1, 53-2; 53-1', 53-2') und eine Drossel (54) aufweist, wobei der Verdampfer (51) zur Übertragung von Wärme vom Kühlmittel auf das Kältemittel eingerichtet ist, und wobei der Kondensator (53-1, 53-2; 53-1', 53-2') zur Abgabe von Wärme vom Kältemittel an die Raumluft in der Fahrerkabine (20) und an die Umgebungsluft eingerichtet ist.

7. Ziviles Kettenfahrzeug (1) nach einem der vorhergehenden Ansprüche, **dadurch gekennzeichnet, dass** im Primärkreislauf (40) eine Heizeinrichtung (32) vorgesehen ist, die zur Erwärmung des Kühlmittels eingerichtet ist.

8. Ziviles Kettenfahrzeug (1) nach einem der vorhergehenden Ansprüche, **dadurch gekennzeichnet, dass** das Kettenfahrzeug (1) als elektrisch angetriebenes Kettenfahrzeug (1) ausgeführt ist mit wenigstens einer elektrischen Antriebseinrichtung (11-1, 11-2, 11-3) zum Bereitstellen von Antriebsleistung und wenigstens einem elektrischen Energiespeicher (B1, B2) zum Bereitstellen von elektrischer Energie zur Antriebseinrichtung (11-1, 11-2, 11-3), wobei der Primärkreislauf (40) zur Kühlung der Antriebseinrichtung (11-1, 11-2, 11-3) und/oder des Energiespeichers (B1, B2) eingerichtet ist.

9. Ziviles Kettenfahrzeug (1) nach Anspruch 8, **dadurch gekennzeichnet, dass** der Primärkreislauf (40) in einen ersten Primärkreislaufzweig (41-1), der zum Kühlen der Antriebseinrichtung (11-1, 11-2, 11-3) eingerichtet ist, und einen zweiten Primärkreislaufzweig (41-2) aufgeteilt ist, der zum Kühlen des Energiespeichers (B1, B2) und zur Übertragung von Wärme vom Kühlmittel auf das Kältemittel des Sekundärkreislaufs (50) eingerichtet ist, wobei der erste und der zweite Primärkreislaufzweig (41-1, 41-2) zum Austausch von Kühlmittel eingerichtet sind.

10. Ziviles Kettenfahrzeug (1) nach Anspruch 9, **dadurch gekennzeichnet, dass** das Kühlmittel im ersten Primärkreislaufzweig (41-1) einen höheren durchschnittlichen Volumenstrom und eine höhere durchschnittliche Temperatur als das Kühlmittel im zweiten Primärkreislaufzweig (41-2) aufweist.
